(19) Europäisches Patentamt
European Patent Office
Office européen des brevets

(11) **EP 3 674 844 B1**

(12) **EUROPEAN PATENT SPECIFICATION**

(45) Date of publication and mention
of the grant of the patent:
**06.07.2022 Bulletin 2022/27**

(21) Application number: **20158210.3**

(22) Date of filing: **20.02.2004**

(51) International Patent Classification (IPC):
**G06F 1/26** *(2006.01)* **H02J 7/00** *(2006.01)*

(52) Cooperative Patent Classification (CPC):
**G06F 1/266; H02J 7/00; H02J 7/0071;
H02J 7/00711; H02J 7/007182;** H02J 2207/30;
H02J 2207/40

(54) **CIRCUIT AND METHOD OF OPERATION FOR AN ADAPTIVE CHARGE RATE POWER SUPPLY**

SCHALTUNG UND BETRIEBSVERFAHREN FÜR EINE ADAPTIVE
LADUNGSRATENENERGIEVERSORGUNG

CIRCUIT ET PROCÉDÉ DE FONCTIONNEMENT D'UNE ALIMENTATION ÉLECTRIQUE À TAUX
DE CHARGE ADAPTATIF

(84) Designated Contracting States:
**AT BE BG CH CY CZ DE DK EE ES FI FR GB GR
HU IE IT LI LU MC NL PT RO SE SI SK TR**

(30) Priority: **21.02.2003 CA 2419497
21.02.2003 US 372446**

(43) Date of publication of application:
**01.07.2020 Bulletin 2020/27**

(62) Document number(s) of the earlier application(s) in
accordance with Art. 76 EPC:
**10181666.8 / 2 264 855
04712981.2 / 1 595 203**

(73) Proprietor: **BlackBerry Limited
Waterloo, Ontario N2K 0A7 (CA)**

(72) Inventors:
 • **Veselic, Dusan
  Waterloo, Ontario N2K 0A7 (CA)**
 • **Habicher, Michael F.
  Waterloo, Ontario N2K 0A7 (CA)**
 • **Malton, Jonathan T.
  Waterloo, Ontario N2K 0A7 (CA)**
 • **Idzik, Jacek
  Waterloo, Ontario N2K 0A7 (CA)**

(74) Representative: **Murgitroyd & Company
Murgitroyd House
165-169 Scotland Street
Glasgow G5 8PL (GB)**

(56) References cited:
**US-A1- 2002 130 638    US-B1- 6 300 744**

 • **"LTC 4053-4.2 USB Compatible Lithium-Ion
  Battery Charger with thermal Regulation", USB
  COMPATIBLE LITHIUM-ION BATTERY
  CHARGER WITH THERMAL REGULATION , 2001,
  page 1-16, XP002282651, USA Retrieved from the
  Internet:
  URL:http://www.linear.com/pdf/4053f.pdf
  [retrieved on 2004-05-28]**

**Description**

<u>**TECHNICAL FIELD**</u>

This invention relates in general to battery chargers, and more specifically to a method and apparatus for charging a battery in a portable communication device from a variety of power sources, including limited capacity sources such as an integral power node of a computer data bus. One such computer data bus would be a USB (universal serial bus) port.

<u>**BACKGOUND ART**</u>

With the current computing and information revolution, portable electronic devices such as cellular telephones, personal digital assistants (PDAs), digital pagers and wireless email devices, are becoming very common.

These portable devices are typically powered by internal batteries which must be recharged periodically by an external power source, using a battery charger. Battery chargers generally receive power from a standard AC electrical outlet and convert the AC power into a low DC voltage for recharging a battery.

The battery chargers of these portable devices also generally employ a "battery charge controller" to manage the charging of the battery. Such battery charge controllers offer functionality such as:

* regulating the voltage and current levels to the rechargeable battery;
* providing status signals to the main processor of the portable device, or operating one or more status LEDs (light emitting diodes);
* providing protection circuits such as overcurrent, undervoltage, and overtemperature protection; and
* shutting themselves off when the charging source has been removed, to minimize battery drain.

Unfortunately, most of these battery charge controllers are designed to draw from a high capacity power supply with a steady voltage that will not sag appreciably under its current demands. This is a problem when one attempts to use a power supply with limited capacity or when the power is delivered via unknown length and gauge of power wires (the resistance of such power wires cause a voltage drop which aggravates the problem). Some computer data buses such as USB (universal serial bus) buses can be used to provide power to external devices, but while such power supplies are very convenient, they have limited capacity and are delivered via standard USB cables whose power wires could vary in length and gauge (anywhere from 20AWG - 28AWG, for example).

The majority of personal computers (PCs) and laptop computers available today, are provided with one or more USB ports as standard components. USB ports are designed to support data communication at speeds of 12 megabits and 1.5 megabits per second (USB 2.0 provides for up to 480 megabits per second), support PnP (Plug and Play) installation software, and support hot plugging (i.e. devices can be connected and disconnected while the PC is running). Thus, USB ports are often used as interfaces to connect keyboards, mouses, game controllers, printers and scanners to PCs.

As well, USB ports are able to supply limited power to a connected device. The standard USB specification requires that "high-power" USB ports be operable to provide a supply voltage of 4.75 - 5.25 VDC and supply a maximum current of at least 500mA (five units). The specification for "low-power" USB ports requires a supply voltage of 4.40 - 5.25 VDC and current of 100 mA (one unit).

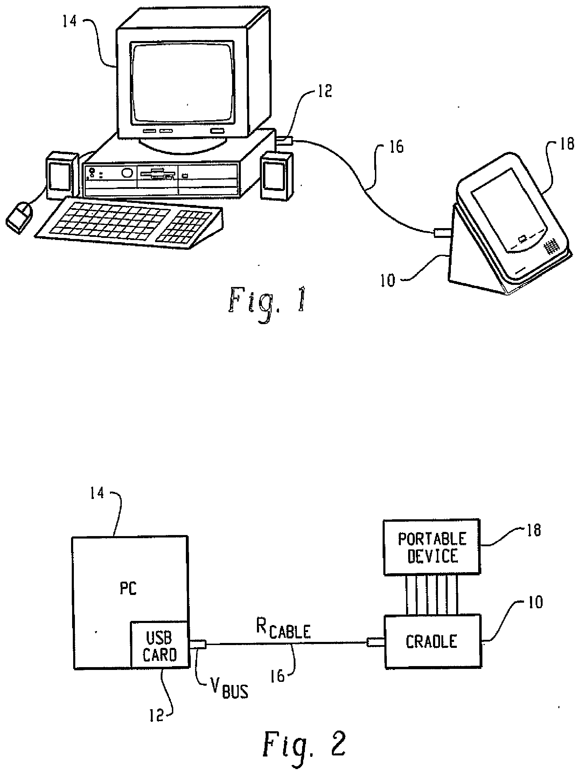

USB ports would seem to be a very logical choice as a power supply for portable devices for a number of reasons. To begin with, USB ports supply a low DC voltage supply which is often very close to, or just above, the voltage of the battery being charged (many portable devices having battery voltages in the range of 2.5 - 4.5 VDC). As well, many portable devices may be operable to upload and download data or software, to and from a personal computer or a laptop computer (often referred to as "syncing"). Thus, many portable devices are supplied with docking cradles as shown in the system diagram of **Figure 1.** This is quite a straightforward system, as the docking cradle **10** is connected to a USB port **12** of a personal computer (PC) **14,** via a simple USB cable and connectors **16.** The mobile device **18** need only be placed into the docking cradle **10** and an electronic connection to the (PC) **14,** is made.

If the USB port **12** has sufficient power, it makes much more sense to use the USB port **12** to supply charging power to the mobile device **18,** rather than using a separate AC charger. For example:

* a USB power supply will have less electrical noise than an AC charger, unless the AC charger incorporates large DC capacitors or inductors;
* an AC charger requires either a heavy transformer or an expensive switching power supply current, neither of which would be required if USB power is used;
* in the USB power supply implementation, the cable and connectors **16** used to connect the docking cradle **10** to the PC **14** could be used to carry both power and data, so no extra physical components would be required at all. In contrast, an AC power supply would have to be provided as a separate physical component, and

- there are no universal standards for AC power supplies; a given AC power supply may require 120VAC or 240VAC as an input, and may provide 3, 4.5, 6, 7.5 or 9 VDC out, with one of large number of different possible connectors and polarities. A traveller who forgets an AC power supply at home, may not be able to find a replacement.

In contrast, the USB standard is widely accepted, so that a traveller whose mobile device is equipped with a USB connector will have a much greater chance of finding a charging source.

Unfortunately, USB ports can only provide limited power, while typical battery charge controllers are designed to receive a steady, high capacity power supply (that is, the input voltage at the battery charge controller is at or near its designed value, and does not drop as charging current increases). The problem becomes clear when considering the block diagram of **Figure 2.** The components of **Figure 2** are the same as those of **Figure 1,** specifically, a docking cradle 10 powered from a USB port **12** of a PC **14,** via cable and connectors **16,** and feeding a portable device **18** resting in the cradle **10.** From this presentation, it is clear that the voltage output from the USB port **12,** $V_{USB}$, will drop as it crosses the cable and connectors **16,** due to its resistance, $R_{CABLE}$. If either the cable resistance ($R_{CABLE}$) or the current drawn ($I_{CABLE}$) is too great, the voltage arriving at the battery charge controller in the mobile device **18,** may be too low. This low voltage will cause many standard battery charge controllers either to shut down or to oscillate and fail to charge the battery in the portable device **18** efficiently.

True, new dedicated battery charge controllers could be developed which are operable with the limited USB power supply and resistance of the cable and connector system, but that would be an expensive and complicated solution. Such a design would become even more complicated to be compatible with both computer data bus power supplies and other power sources, such as AC power supplies.

There is therefore a need for a method and apparatus which allows standard battery charge controllers to be supplied with power from standard computer data busses such as USB ports. This design must be provided with consideration for the cost of electrical components, the limited physical board area in portable devices, the reliability and the complexity of the design. It is also desirable that this method and apparatus be operable with both computer data bus power supplies, and other power sources such as AC power supplies.

"LTC 4053-4.2 USB Compatible Lithium-Ion Battery Charger with thermal Regulation" discloses a linear charger for lithium-ion batteries that can be powered directly from a USB port.

US 6300744 B1 discloses an AC adapter to supply power to both an electronic device and a rechargeable battery. The voltage at the output terminal of the AC adapter is detected and delivered to a battery charger that is used to supply a constant current to the battery, when the computer is turned on while the battery is being recharged. When the output voltage falls below a predetermined trigger voltage, a voltage detector instructs the battery charger to limit the current delivered to the battery, and the current is reduced until the voltage at the output of the AC adapter again reaches the trigger voltage.

## DISCLOSURE OF THE INVENTION

The present invention provides a battery charger as detailed in claim 1. Advantageous features are provided in the dependent claims..

## BRIEF DESCRIPTION OF THE DRAWINGS

These and other features of the invention will become more apparent from the following description in which reference is made to the appended drawings in which:

**Figure 1** presents a physical layout of a personal computer connected to a portable electronic device in a manner known in the art;

**Figure 2** presents a block diagram of the system presented in Figure 1, highlighting the problem of voltage drop between the personal computer and the portable electronic device;

**Figure 3** presents a electrical schematic diagram of a battery charging circuit in a broad embodiment of the invention;

**Figure 4** presents an electrical schematic diagram of a battery charging circuit using a comparator, in an embodiment of the invention;

**Figure 5** presents an electrical schematic diagram of a battery charging circuit using an electronic potentiometer, in an embodiment of the invention;

**Figure 6** presents a timing diagram of charging current provided by the embodiment of **Figure 5;** and

**Figure 7** presents an electrical schematic diagram of a battery charge circuit in an embodiment of the invention.

## BEST MODE FOR CARRYING OUT THE INVENTION

The general problem addressed by the invention is that typical battery charge controllers are designed to receive a steady, high capacity power supply while such a power supply is often unavailable, or is simply inconvenient. One of the most common battery charge controllers, for example, the LTC1734 from Linear Technology is designed to receive 5 VDC in, and has a low voltage lockout at 4.53V (that is, if the LTC1734 receives a supply voltage of less than 4.53VDC, it simply shuts down). When the voltage drop across the supply cable and connectors 16 are considered, the voltage supplied by the power node of a data bus such as a USB port, may be lower than this low voltage lockout. Therefore, though the LTC1734 is widely available, inexpensive and reliable, it cannot be used effectively in this environment.

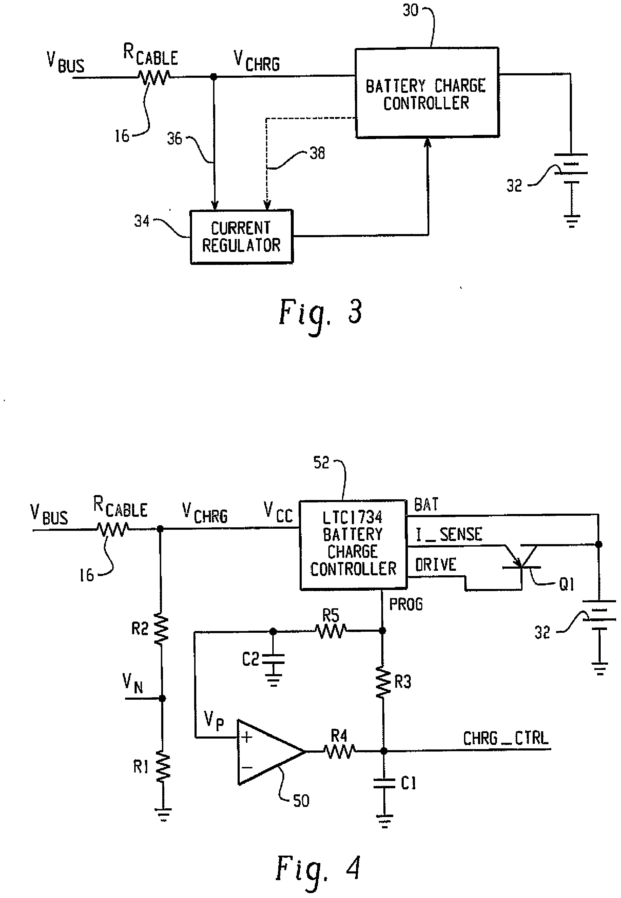

A circuit which overcomes this problem, is presented as a block diagram in Figure 3. This figure presents a battery charging circuit which uses a standard battery charge controller 30 known in the art, coupled to a rechargeable battery or batteries 32. The battery charge controller 30 is provided with power from some manner of external power, such as a computer data bus. This power connection is presented in Figure 3 in the form of input voltage $V_{BUS}$. This $V_{BUS}$ voltage will be reduced due to the resistance of the electrical cable and connectors **16,** $R_{CABLE}$. Thus, the battery charge controller 30 only receives a voltage of $V_{CHRG} = V_{BUS} - (R_{CABLE} \times I_{CABLE})$.

As will be explained in greater detail hereinafter, the voltage drop across $R_{CABLE}$ may result in the $V_{CHRG}$ voltage being lower than the low voltage threshold for the battery charge controller **30.** The invention therefore adds a current regulator **34** to the circuit. The resistance $R_{CABLE}$ is of course fixed, but by reducing the current drawn by the battery charge controller **30,** $I_{CABLE}$, the voltage drop across $R_{CABLE}$ will decrease, thus avoiding the low voltage shut off of the battery charge controller **30,** and allowing the battery **32** to be charged.

A number of current regulators **34** are described herein, but in general it desirable that the current regulator:

- maximize the current being fed to the battery **32,** and therefore maximizing the current drawn from the power supply ($I_{CABLE}$), while
- keeping the $V_{CHRG}$ voltage greater than the low voltage shut off level of the battery charge controller **30.**

In some embodiments of the invention the current regulator **34** uses $V_{CHRG}$ as an input (via connection **36**), while in other embodiments the current regulator **34** uses an output of the battery charge controller **30** (via connector **38**). Still other embodiments use no feedback to the current regulator **34.**

Say, for example, that the voltage provided from the computer data bus is 4.75 - 5.25 VDC; that is, $V_{BUS}$ = 4.75 - 5.25 VDC; the circuit must therefore be designed to operate at $V_{BUS}$ = 4.75 VDC. Suppose also that the resistance of the cable and connectors **16** is 0.5 ohms ($R_{CABLE}$ = 0.5 ohms) and that the low voltage shut off of the battery charge controller **30** is 4.53 VDC. The battery charge controller **30** will endeavour to draw as much current as needed to charge the battery **32,** which, in the case of a USB bus, will be limited to about 0.5 A. Thus, the voltage arriving at the battery charge controller, $V_{CHRG}$, will be:

$$V_{CHRG} = V_{BUS} - R_{CABLE} \times I_{CABLE} \qquad (1)$$
$$= 4.75 \text{ VDC} - (0.5 \text{ ohms} \times 0.5 \text{ A})$$
$$= 4.5 \text{ VDC}$$

If the low voltage shutdown of the battery charge controller is higher than $V_{CHRG}$ = 4.5 VDC, it will therefore shutdown. This is the case for the LTC1734 controller, for example, which shuts down at 4.53 VDC.

The above calculations did not even take into account component tolerances, which cannot be ignored. The LTC1734 application notes state that this device has a tolerance of 1%. If the current regulator **34** incorporates a number of simple components then the circuit of **Figure 3** may easily have a tolerance of 3% or so. Thus, $V_{CHRG}$ may effectively be in the range of 4.37 VDC; well below the 4.53 VDC cut off for the LTC1734 battery charge controller.

Equation (1) can also be used to determine a current level, $I_{CABLE}$, which does not cause the battery charge controller 30 to shutdown:

$$V_{CHRG} = V_{BUS} - R_{CABLE} \times I_{CABLE} \qquad (1)$$

$$I_{CABLE} = (V_{BUS} - V_{CHRG}) / R_{CABLE} \qquad (2)$$
$$= (4.75 - 4.53) / 0.5$$
$$= 0.44 \text{ A}$$

Thus, reducing the current $I_{CABLE}$ to 0.44 A is sufficient to avoid the low voltage shut off of the battery charge controller 30. Allowing for 3% tolerance:

$$I_{CABLE} = (V_{BUS} - V_{CHRG} \times 3\%) / R_{CABLE} \qquad (2)$$
$$= (4.75 - 4.53 \times 1.03) / 0.5$$
$$= (0.09) / 0.5$$
$$= 0.18 \text{ A}$$

That is, the current $I_{CABLE}$ may have to be reduced to 0.18 A to avoid the low voltage shutdown.

Thus, the use of the circuit in **Figure 3** allows computer data buses and similar power supplies with limited capacity, to be used to charge mobile devices, without causing the battery charge controller **30** to shut down.

The solution of this embodiment adapts to the capabilities of any external power source to minimize charge time. If, for example, 5 VDC arrives at the input of the battery charge controller **30** with unlimited current and no voltage drop as the current draw. increases, then the regulating circuit **34** will not restrict the current drawn.

A number of different embodiments will now be described, Each embodiment uses a very small number of simple, reliable components. Thus, as a whole, the invention provides an effective solution which is inexpensive, reliable and consumes minimal board space in a portable device.

## Comparator Embodiment

**Figure 4** presents an electrical schematic diagram charging circuit which employs two main components: a comparator **50** and a LTC1734 battery charge controller **52** having a current control pin PROG. Varying the current drawn through the control pin PROG will vary the current supplied by the LTC1734 battery charge controller **52** to the battery **32**. Drawing more current out of the PROG pin will increase the charge current, while reducing the PROG current will reduce the charge current.

Many battery charge controllers have a similar current control system, but this embodiment will be described with respect to the LTC1734 controller. The LTC1734 controller can be operated in either constant current mode, or constant voltage mode.

In the constant voltage mode (entered when the charge voltage of the battery **32** reaches 4.2 VDC externally), the LTC1734 controller **52** servos its DRIVE pin to maintain its BAT pin at 4.2 VDC. In this mode, the current provided by the LTC1734 controller **52** will necessarily drop, and the current flowing out of the PROG pin will drop accordingly. As this latter mode of operation is not affected by the system described herein, it will not be discussed in any further detail.

As noted above, the minimum required voltage at VCC for proper operation of the LTC1734 controller **52** is 4.53 VDC, and the USB specification states that for standard USB equipment under a high load (i.e. 500mA), $V_{CHRG}$ may be pulled as low as 4.35V - too low for the LTC1734 controller **52** to operate. To prevent this, the comparator **50** monitors $V_{CHRG}$ (scaled down to a more useful voltage - $V_N$ - by the voltage divider R1 and R2) fed to the inverting input of the comparator **50** and compares it to a reference voltage ($V_P$) which is fed to the comparator **50's** non- inverting input.

$V_P$ is derived by low-pass filtering the LTC1734 controller **52's** PROG pin output through resistor R5 and capacitor C2, as $V_{PROG}$ = 1.5 VDC when the LTC1734 controller **52** is operating in the constant-current mode. R5 also serves to isolate other components from the LTC1734 controller **52,** ensuring proper operation of the LTC1734 controller **52.** Resistors R1 and R2 are chosen such that $V_{CHRG}$ is a suitable tolerance above 4.53 VDC when $V_N$ = 1.5 VDC.

In the intended and published usage of the LTC1734 controller 52, the voltage across resistor R3 is simply $V_{PROG}$ since R3 is intended to be tied between PROG and ground. In such a configuration, determining and setting a fixed charge current $I_{CHRG}$, is straightforward. In the system of the invention, rather than adjusting R3 to control charge current as most alternative ideas suggest, this circuit adjusts the voltage across a fixed R3 by changing the voltage across C1 (that is, $V_{C1}$) such that:

$$I_{CHG} = \frac{1.5V - V_{C1}}{R3} \times 1000$$

$$(3)$$

$V_{C1}$ is controlled by the comparator **50**. As the comparator **50** is an open- drain comparator (a MAX9120 comparator was used for testing purposes, though similar parts such as the LMV7235 should work as well), when $V_N > V_P$, the comparator **50** will sink current into its output pin; otherwise the output pin will float.

The control loop operates as follows:

1. as $I_{CHRG}$ drops, the voltage drop across the cable and connectors **16** also drops, so $V_{CHRG}$ rises, per equation (1) above. As $V_{CHRG}$ rises, the positive input to the comparator **50**, $V_N$, will also rise. For $V_N$ rising, when $V_N > V_P + 0.5 V_{HYS}$ ($V_{HYS}$ being the input hysteresis for the comparator **50**), the comparator **50** will turn on its output and pull charge out of C1, decreasing $V_{C1}$ and causing $I_{CHRG}$ to increase;
2. as $I_{CHRG}$ increases, the voltage drop across the cable and connectors **16** rises, causing $V_{CHRG}$, and consequently $V_N$, to drop. For $V_N$ falling, when $V_N < V_P - 0.5 V_{HYS}$, the comparator **50** turns off its output, allowing the LTC1734 controller **52's** PROG pin to pour charge into C1, causing. $V_{C1}$ to increase and decreasing $I_{CHRG}$.

Resistor R4 smooths out the ripples on C1 and limits current transients through the comparator **50's** output.

When the power supply is capable of supplying all the power the LTC1734 controller **52** can handle, $V_{C1}$ will be at a minimum and $I_{CHG}$ will be approximately determined by:

$$I_{CHG} = \frac{1.5V}{R3 + R4 + R_{OUT}}$$

$$(4)$$

$R_{OUT}$ is the resistance from the comparator **50's** output to GND when the output is active. Because the LTC1734 controller **52** is susceptible to malfunction due to capacitive effects in the PROG circuit, it is best to keep R4 $\leq$ 0.1 R3, but this will depend on the application, and can easily be determined by one skilled in the art.

When power is first applied to this circuit through $V_{BUS}$, $V_{C1}$ = 0 and the charger will start and stay on. A high-on-reset signal of 3.0V applied to CHG_CTRL will keep the charger off; once the "off' state has been established, the CHG_CTRL signal can be removed. Conversely, pulling CHG_CTRL to GND for a period of time and then floating it will turn on the charger.

**Testing of Comparator Embodiment**

The circuit of **Figure 4** was tested with the following component values:

R1 = 10.0kΩ

R2 = 21.0kΩ

R3 = 3.09kΩ

R4 = 200Ω

R5 = 10.0kΩ

C1 = 1μF

C2 = 0.1μF

The R4, C1 time constant was chosen to be at least 10 times larger than the propagation delay of the MAX9120 for stability.

For testing purposes, a 1Ω resistor was used to simulate the resistance of the supply cable and connectors **16**.

With $V_{BUS}$ = 6 VDC, $I_{CHRG}$ = 440mA.

As $V_{BUS}$ was gradually reduced, $I_{CHRG}$ remained at 440mA until $V_{BUS}$ = 5.075 VDC, at which point $I_{CHRG}$ started to drop. By the time $V_{BUS}$ = 4.71 VDC, the charge current $I_{CHRG}$, had dropped to 92mA.

Using an HP54645D oscilloscope to probe the LTC1734 controller **52's** VCC pin showed the following:

- for $I_{CHRG}$ = 440mA and $V_{BUS}$ = 5.075 VDC, VCC = 4.63 VDC; and
- for $I_{CHRG}$ = 92mA and $V_{BUS}$ = 4.71 VDC, VCC = 4.63 VDC.

This is consistent with the chosen values of R1 and R2, using the PROG reference scheme.

With $V_{BUS}$ = 4.63 VDC, the LTC1734 controller **52** turned off and $V_{PROG}$ = 4.625 VDC.

By returning $V_{BUS}$ to 6 VDC, the LTC1734 controller **52** could be turned on again by momentarily pulling CHG_CTRL to GND. Similarly, pulling CHG_CTRL above about .2.25 VDC turned the LTC1734 controller **52** back off.

**Digital Potentiometer Embodiment**

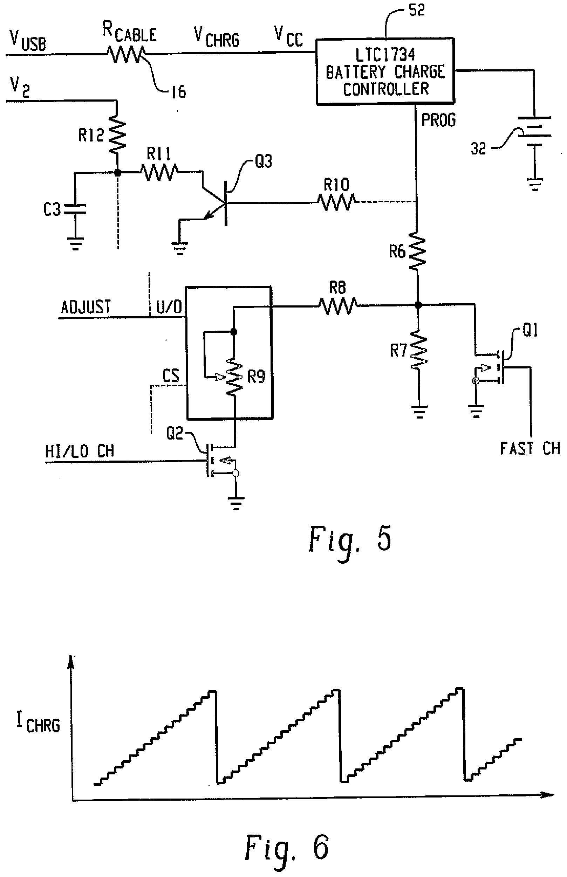

The invention is not strictly limited to the case where the low voltage threshold is never exceeded. In the embodiment of **Figures 5** and **6,** for example, the low voltage threshold could be exceeded with each periodic cycle of current ramping, but the duty cycle still be sufficient to charge the battery. The only difficulty with such a circuit is that it would be necessary to reset the battery charge controller with each cycle. The circuit of **Figures 5** and **6** ramps through a range of current supply, but uses a reset circuit to stop the ramping before the low voltage threshold is exceeded.

Like the embodiment of **Figure 4,** this circuit uses the LTC1734 battery charge controller 52, though other battery charge controllers having a current control pin PROG could also be used. However, rather than having a comparator circuit as in **Figure 4** which modulates the current draw to avoid the low voltage shut off, this circuit ramps from a low current level, through to a high current level. Before the low voltage threshold is reached, the LTC1734 controller **52** shuts down and the cycle is repeated. The circuit also includes provisions for setting the current draw to a number of predetermined and fixed levels.

Looking first at the simplest case, with the inputs FAST CH, HI/LO CH and ADJUST all at 0 VDC, then there will be no current flow through either of the semiconductors Q2 or Q3. The resistance between PROG and ground will therefore be equal to the sum of resistors R6 and R7, and this will determine the current flow through the LTC1734 controller **52.** If these resistors are set to 2.2kohms and 16.5Kohms respectively, then the circuit will provide 100mA.

If the FAST CH is held high, then current will flow through R6, and the resistance from PROG to ground will only be 2.2kohms. Thus, the current flow through the LTC1734 controller **52** will be approximately 750mA. This setting would not be useful with a low capacity supply such as a USB port, but could be used with a high capacity supply such as an AC transformer.

Finally, with the HI/LO CH input high, current will flow through resistor R8, electronic potentiometer R9, and Q2. Resistor R8 preferably has a value of 1kohm, and R9 is preferably a MAX5467 potentiometer, which has a range of 0 - 10kohms, in 32 discrete steps. Thus, this circuit will step through a resistance of 11kohms down to 1kohm in 32 discrete steps (note that this circuit is in parallel to R7, so R7 must be considered in determined the current drawn from PROG). This would result in the current output similar to that shown in **Figure 6** (the number of steps that would actually be made prior to reaching the low voltage shut off varies with the particular application due to component values and tolerances, and other factors).

The ADJUST and HI/LO CH inputs could be controlled using a microcontroller or similar device. As well, hardware components such as an oscillator could also be used to control the rate through which the steps of the potentiometer are stepped.

In the preferred embodiment of the invention, the HI/LO CH input also feeds the CS pin on the MAX5467. This is a "chip select" input - in combination with U/D input fed by the ADJUST input, it is used to increment or decrement the electronic potentiometer R9. Also, a separate reset circuit is provided using resistors R10, R11, R12, capacitor C3, and transistor Q3. This circuit could be powered using any reliable voltage V2 (in the preferred embodiment, V2 = +3.3 VDC, which is provided from $V_{LSB}$ and a voltage regulator).

The preferred values for the components in this circuit are:

R6 = 2.2kohms
R7 = 16.5kohms
R8 = 1.0kohms
R9 = 10kohms
R10 = 200.0kohms
R11 = 10.0kohms
R12 = 200kohms
C3 = 22 pF

## Software Embodiments

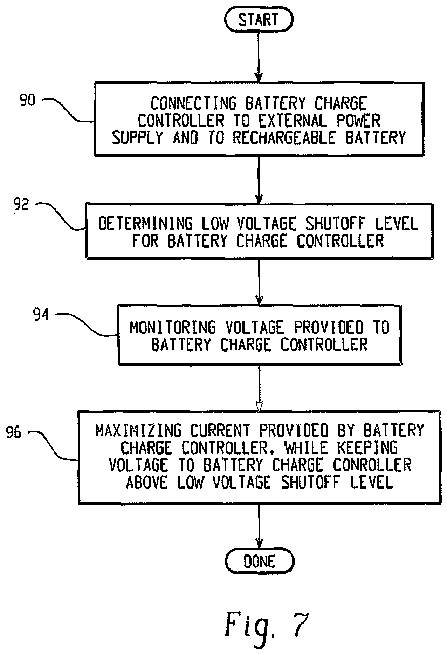

Rather than using only electronic hardware as shown above, the invention may also be implemented using a combination a hardware and software components, including programmable devices such as digital signal processors (DSPs), microcontrollers, field programmable gate arrays (FPGAs), application specific integrated circuits (ASICs) and the like. Such an embodiment could be implemented as shown in the flow chart of **Figure 7.**

Like the embodiments described above, this method could be used to charge any rechargeable battery in a portable or similar electronic device. Any external power supply could be used, though the invention is most useful with power supplies of limited capacity. The method of the invention adjusts to the parameters of external power supplies to minimize charge time.

As shown in **Figure 7,** the method of the invention begins at step **90** by connecting a battery charge controller **30** to the external power supply and to the rechargeable battery in the portable device **18.** As described herein above, the connection to the external power supply is preferably made via a USB cable and connectors **16,** and a cradle **10** to hold the portable device **18.**

A low voltage shut off level for the battery charge controller in the portable device **18** is then determined at step **92.** This low voltage shut off level is generally predetermined as the software algorithm is executed by the portable device **18,** and the parameters of the battery charge controller **30** being used in the portable device **18** can be programmed into it.

The voltage provided by the external power supply to the battery charge controller **30** is then monitored at step **94.** This step could be provided periodically, continuously, or in response to an event, such as a change in the charge current. Various devices, such as microcontrollers, are often provided with integral ADCs (analogue to digital converters) which could be used to perform this monitoring function.

The current drawn by the battery charge controller 30 is then maximized at step **96,** with the limitation that the voltage being supplied to the battery charge controller **30** must be kept above the low voltage shut off level. The current drawn by the battery charge controller **30** could be controlled in a number of manners. For example, most microcontrollers have DAC (digital to analogue converter) outputs which could be used to control the current provided by a device such as the LTC1734 controller **52,** described herein above.

The balance of the software code needed to perform this algorithm would be straightforward to one skilled in the art.

The method steps of the invention may be embodiment in sets of executable machine code stored in a variety of formats such as object code or source code, integrated with the code of other programs, implemented as subroutines, by external program calls or by other techniques as known in the art.

Even the hardware embodiments of the invention could be encoded in a software form such as the hardware development languages (HDL code) used to fabricate integrated circuits. This HDL or similar code could be stored on any electronic memory means such computer diskettes, CD-Roms, Random Access Memory (RAM) and Read Only Memory (ROM). As well, electronic signals representing this software code may also be transmitted via a communication network.

## Options and Alternatives

While particular embodiments of the present invention have been shown and described, it is clear that changes and modifications may be made to such embodiments without departing from the true scope and spirit of the invention. For example:

1. the circuit of the invention could be used with any manner of power source including: conventional AC power supplies (often referred to as "bricks"), computer data busses such as USB ports, external battery packs, laptop power supplies, DC outlets on aircraft;
2. any manner of electrical appliance could be charged with such a circuit including portable laptop computers, personal digital assistants (PDAs), cellular telephones, wireless email and paging devices; and
3. any manner of rechargeable battery could be used including single or multiple lithium-ion, nickel-cadmium, or other types of cells.

Again, such implementations would be clear to one skilled in the art from the teachings herein, and do not take away from the invention.

## INDUSTRIAL APPLICABILITY

The present invention provides to a method and apparatus for charging a battery in a portable communication device from a variety of power sources.

**Claims**

1. A battery charger comprising:

   a battery charge controller (52) including an input for connecting the controller (52) to an external power supply, wherein a current output of the battery charge controller (52) varies with a supply voltage provided by the external power supply, and wherein the battery charge controller (52) comprises a current control input (PROG); and a comparator (50) for lowering a charge current drawn by the battery charge controller (52) when the supply voltage drops below a preset reference level;
   wherein the comparator (50) is operatively connected to the input of the battery charge controller (52) so as to receive a voltage signal ($V_N$) depending from the supply voltage, and wherein the comparator (50) is further configured to:

   receive a reference voltage signal ($V_P$) provided by the battery charge controller (52) via the current control input (PROG); and
   control the charge current based on a comparison between the voltage signal ($V_N$) and the reference voltage signal ($V_P$).

2. The battery charger according to claim 1, wherein the battery charger comprises a voltage divider circuit ($R_1$, $R_2$) connected to an input of the comparator (50) to generate the voltage signal ($V_N$) from the supply voltage.

3. The battery charger according to claim 1, wherein the battery charger comprises a capacitor ($C_1$) coupled between an output of the comparator (50) and a ground potential, and wherein a charge of the capacitor changes accordingly to a change of the operating status of the comparator (50).

4. The battery charger according to claim 1, wherein battery charger comprises a fixed value resistor ($R_3$) coupled between the current control input (PROG) of the battery charge controller (52) and the output of the comparator (50), the comparator (50) being operable to adjust a voltage across the fixed value resistor by changing a voltage ($V_{C1}$) across the capacitor ($C_1$) coupled between the output of the comparator (52) and the ground potential.

5. The battery charger according to claim 4, wherein the charge current is expressed as:

$$I_{CHRG} = \frac{1.5V - V_{C1}}{R_3} \times 1000$$

wherein 1.5V is a DC voltage, $R_3$ is the fixed value resistor value and $V_{C1}$ is the voltage across the capacitor ($C_1$).

6. The battery charger according to any preceding claim further comprising a resistor ($R_5$) and capacitor ($C_2$) component circuit, wherein the resistor ($R_5$) and capacitor ($C_2$) component circuit is operable as a low pass filter to filter the reference voltage signal ($V_P$).

7. The battery charger according to any preceding claim, wherein the resistor ($R_5$) of the resistor and capacitor component circuit is operable to isolate other components from the battery charge controller (52).

8. The battery charger according to any preceding claim, wherein the battery charge controller (52) is operable in a constant current mode.

9. The battery charger according to any preceding claim, wherein the comparator is an open-drain comparator and operable to sink current to the output of the comparator (50) when the voltage signal ($V_N$) is greater than the reference voltage signal ($V_P$).

10. The battery charger according to any preceding claim, wherein the voltage signal ($V_N$) is coupled to the inverting input of the comparator (50) and the reference voltage signal ($V_P$) is coupled to the non-inverting input of the comparator (50).

**11.** The battery charger according to claim 3, wherein when:

$$V_N > V_P + 0.5V_{HYS}$$

the comparator is configured to turn on and pull charge out of the capacitor ($C_1$) coupled to its output thereby decreasing the voltage ($V_{C_1}$) across the capacitor ($C_1$) causing the charge current to increase;
wherein $V_{HSY}$ is an input hysteresis of the comparator (52).

**12.** The battery charger according to claim 3 or 11, wherein when:

$$V_N < V_P - 0.5V_{HYS}$$

the comparator is configured to turn off thereby causing the control pin (PROG) of the battery charge controller (50) to pour charge into the capacitor ($C_1$) coupled to the output of the comparator (50) so as to increase the voltage ($V_{C_1}$) across the capacitor ($C_1$) and cause the charge current to decrease;
wherein $V_{HSY}$ is an input hysteresis of the comparator (52).

**Patentansprüche**

**1.** Ein Batterieladegerät, das Folgendes beinhaltet:

eine Batterieladungssteuereinheit (52), die einen Eingang zum Verbinden der Steuereinheit (52) mit einer externen Stromversorgung umfasst, wobei ein Stromausgang der Batterieladungssteuereinheit (52) mit einer Versorgungsspannung variiert, die von der externen Stromversorgung bereitgestellt wird, und wobei die Batterieladungssteuereinheit (52) einen Stromsteuerungseingang (PROG) beinhaltet; und
einen Vergleichsmesser (50) zum Senken eines Ladestroms, der durch die Batterieladungssteuereinheit (52) gezogen wird, wenn die Versorgungsspannung unter einen voreingestellten Referenzpegel fällt;
wobei der Vergleichsmesser (50) betriebsfähig mit dem Eingang der Batterieladungssteuereinheit (52) verbunden ist, um ein Spannungssignal ($V_N$) zu empfangen, das von der Versorgungsspannung abhängt, und wobei der Vergleichsmesser (50) ferner für Folgendes konfiguriert ist:

Empfangen eines Referenzspannungssignals ($V_P$), das durch die Batterieladungssteuereinheit (52) über den Stromsteuerungseingang (PROG) bereitgestellt wird; und
Steuern des Ladestroms basierend auf einem Vergleich zwischen dem Spannungssignal ($V_N$) und dem Referenzspannungssignal ($V_P$).

**2.** Batterieladegerät gemäß Anspruch 1, wobei das Batterieladegerät eine Spannungsteilerschaltung ($R_1$, $R_2$) beinhaltet, die mit einem Eingang des Vergleichsmessers (50) verbunden ist, um das Spannungssignal ($V_N$) aus der Versorgungsspannung zu erzeugen.

**3.** Batterieladegerät gemäß Anspruch 1, wobei das Batterieladegerät einen Kondensator ($C_1$) beinhaltet, der zwischen einem Ausgang des Vergleichsmessers (50) und einem Erdpotential gekoppelt ist, und wobei sich eine Ladung des Kondensators entsprechend einer Änderung des Betriebsstatus des Vergleichsmessers (50) ändert.

**4.** Batterieladegerät gemäß Anspruch 1, wobei das Batterieladegerät einen Festwertwiderstand ($R_3$) beinhaltet, der zwischen dem Stromsteuerungseingang (PROG) der Batterieladungssteuereinheit (52) und dem Ausgang des Vergleichsmessers (50) gekoppelt ist, wobei der Vergleichsmesser (50) betriebsfähig ist, um eine Spannung an dem Festwertwiderstand durch Ändern einer Spannung ($V_{C_1}$) an dem Kondensator ($C_1$), der zwischen dem Ausgang des Vergleichsmessers (52) und dem Erdpotential gekoppelt ist, anzupassen.

**5.** Batterieladegerät gemäß Anspruch 4, wobei der Ladestrom als Folgendes ausgedrückt ist:

$$I_{CHRG} = \frac{1{,}5\,V - V_{C_1}}{R_3} \times 1000$$

,

wobei 1,5 Volt eine Gleichspannung ist, $R_3$ der Festwertresistorwert ist und $V_{C1}$ die Spannung an dem Kondensator ($C_1$) ist.

6. Batterieladegerät gemäß einem der vorhergehenden Ansprüche, das ferner eine Widerstands($R_5$)- und Kondensator($C_2$)-Komponentenschaltung beinhaltet, wobei die Widerstands($R_5$)- und Kondensator($C_2$)-Komponentenschaltung als ein Tiefpassfilter betriebsfähig ist, um das Referenzspannungssignal ($V_P$) zu filtern.

7. Batterieladegerät gemäß einem der vorhergehenden Ansprüche, wobei der Widerstand ($R_5$) der Widerstands- und Kondensatorkomponentenschaltung betriebsfähig ist, um andere Komponenten von der Batterieladungssteuereinheit (52) zu isolieren.

8. Batterieladegerät gemäß einem der vorhergehenden Ansprüche, wobei die Batterieladungssteuereinheit (52) in einem Konstantstrommodus betriebsfähig ist.

9. Batterieladegerät gemäß einem der vorhergehenden Ansprüche, wobei der Vergleichsmesser ein Vergleichsmesser mit offenem Drain ist und betriebsfähig ist, um Strom in den Ausgang des Vergleichsmessers (50) zu versenken, wenn das Spannungssignal ($V_N$) größer als das Referenzspannungssignal ($V_P$) ist.

10. Batterieladegerät gemäß einem der vorhergehenden Ansprüche, wobei das Spannungssignal ($V_N$) mit dem invertierenden Eingang des Vergleichsmessers (50) gekoppelt ist und das Referenzspannungssignal ($V_P$) mit dem nichtinvertierenden Eingang des Vergleichsmessers (50) gekoppelt ist.

11. Batterieladegerät gemäß Anspruch 3, wobei, wenn:

$$V_N > V_P + 0{,}5\, V_{HYS,}$$

der Vergleichsmesser konfiguriert ist, um den Kondensator ($C_1$), der an seinen Eingang gekoppelt ist, einzuschalten und Ladung daraus abzuziehen, wodurch die Spannung ($V_{C1}$) an dem Kondensator ($C_1$) gesenkt wird, was bewirkt, dass der Ladestrom erhöht wird;
wobei $V_{HSY}$ eine Eingangshysterese des Vergleichsmessers (52) ist.

12. Batterieladegerät gemäß Anspruch 3 oder 11, wobei, wenn:

$$V_N < V_P - 0{,}5\, V_{HYS,}$$

der Vergleichsmesser konfiguriert ist, um sich auszuschalten, wodurch bewirkt wird, dass der Steuerungsstift (PROG) der Batterieladungssteuereinheit (50) Ladung in den Kondensator ($C_1$), der mit dem Ausgang des Vergleichsmessers (50) gekoppelt ist, einzuspeisen, um die Spannung ($V_{C1}$) an dem Kondensator ($C_1$) zu erhöhen und zu bewirken, dass der Ladestrom sinkt;
wobei $V_{HSY}$ eine Eingangshysterese des Vergleichsmessers (52) ist.

**Revendications**

1. Un chargeur de batterie comprenant :

un organe de commande de charge de batterie (52) incluant une entrée pour raccorder l'organe de commande (52) à une alimentation électrique externe, où une sortie de courant de l'organe de commande de charge de batterie (52) varie en fonction d'une tension d'alimentation fournie par l'alimentation électrique externe, et où l'organe de commande de charge de batterie (52) comprend une entrée de commande de courant (PROG) ; et
un comparateur (50) pour abaisser un appel de courant de charge par l'organe de commande de charge de batterie (52) lorsque la tension d'alimentation tombe en deçà d'un niveau de référence prédéterminé ;
où le comparateur (50) est raccordé fonctionnellement à l'entrée de l'organe de commande de charge de batterie (52) de sorte à recevoir un signal de tension ($V_N$) dépendant de la tension d'alimentation, et où le comparateur (50) est en outre configuré pour :

recevoir un signal de tension de référence ($V_P$) fourni par l'organe de commande de charge de batterie (52) par l'intermédiaire de l'entrée de commande de courant (PROG) ; et

commander le courant de charge sur la base d'une comparaison entre le signal de tension ($V_N$) et le signal de tension de référence ($V_P$).

2. Le chargeur de batterie selon la revendication 1, le chargeur de batterie comprenant un circuit diviseur de tension ($R_1$, $R_2$) raccordé à une entrée du comparateur (50) afin de générer le signal de tension ($V_N$) à partir de la tension d'alimentation.

3. Le chargeur de batterie selon la revendication 1, le chargeur de batterie comprenant un condensateur ($C_1$) couplé entre une sortie du comparateur (50) et un potentiel de masse, et où une charge du condensateur change selon un changement de l'état de fonctionnement du comparateur (50).

4. Le chargeur de batterie selon la revendication 1, le chargeur de batterie comprenant une résistance de valeur fixe ($R_3$) couplée entre l'entrée de commande de courant (PROG) de l'organe de commande de charge de batterie (52) et la sortie du comparateur (50), le comparateur (50) pouvant fonctionner pour régler une tension de part en part de la résistance de valeur fixe en changeant une tension ($V_{C1}$) de part en part du condensateur ($C_1$) couplé entre la sortie du comparateur (52) et le potentiel de masse.

5. Le chargeur de batterie selon la revendication 4, où le courant de charge est exprimé comme :

$$I_{CHRG} = \frac{1,5\,V - V_{C1}}{R_3} \times 1000$$

où 1,5 V est une tension en courant continu, $R_3$ est la valeur de résistance de valeur fixe et $V_{C1}$ est la tension de part en part du condensateur ($C_1$).

6. Le chargeur de batterie selon n'importe quelle revendication précédente comprenant en outre un circuit de composant de résistance ($R_5$) et de condensateur ($C_2$), le circuit de composant de résistance ($R_5$) et de condensateur ($C_2$) pouvant fonctionner comme un filtre passe-bas afin de filtrer le signal de tension de référence ($V_P$).

7. Le chargeur de batterie selon n'importe quelle revendication précédente, où la résistance ($R_5$) du circuit de composant de résistance et de condensateur peut fonctionner afin d'isoler d'autres composants de l'organe de commande de charge de batterie (52).

8. Le chargeur de batterie selon n'importe quelle revendication précédente, où l'organe de commande de charge de batterie (52) peut fonctionner en un mode de courant constant.

9. Le chargeur de batterie selon n'importe quelle revendication précédente, où le comparateur est un comparateur à collecteur ouvert et peut fonctionner pour absorber du courant vers la sortie du comparateur (50) lorsque le signal de tension ($V_N$) est supérieur au signal de tension de référence ($V_P$).

10. Le chargeur de batterie selon n'importe quelle revendication précédente, où le signal de tension ($V_N$) est couplé à l'entrée inverseuse du comparateur (50) et le signal de tension de référence ($V_P$) est couplé à l'entrée non inverseuse du comparateur (50).

11. Le chargeur de batterie selon la revendication 3, où lorsque :

$$V_N > V_P + 0,5\,V_{HYS,}$$

le comparateur est configuré pour s'allumer et retirer de la charge du condensateur ($C_1$) couplé à sa sortie, diminuant de ce fait la tension ($V_{C1}$) de part en part du condensateur ($C_1$), amenant le courant de charge à augmenter ;

où $V_{HSY}$ est une hystérèse d'entrée du comparateur (52).

12. Le chargeur de batterie selon la revendication 3 ou la revendication 11, où lorsque :

$$V_N < V_P - 0{,}5\, V_{HYS,}$$

le comparateur est configuré pour s'éteindre, amenant de ce fait la broche de commande (PROG) de l'organe de commande de charge de batterie (50) à déverser une charge dans le condensateur ($C_1$) couplé à la sortie du comparateur (50) de sorte à augmenter la tension ($V_{C1}$) de part en part du condensateur ($C_1$) et amener le courant de charge à diminuer ;
où $V_{HSY}$ est une hystérèse d'entrée du comparateur (52).

$$V_N < V_P - 0{,}5\, V_{HYS,}$$

Fig. 1

Fig. 2

**Fig. 3**

**Fig. 4**

Fig. 5

Fig. 6

START

90 — CONNECTING BATTERY CHARGE
CONTROLLER TO EXTERNAL POWER
SUPPLY AND TO RECHARGEABLE BATTERY

92 — DETERMINING LOW VOLTAGE SHUTOFF LEVEL
FOR BATTERY CHARGE CONTROLLER

94 — MONITORING VOLTAGE PROVIDED TO
BATTERY CHARGE CONTROLLER

96 — MAXIMIZING CURRENT PROVIDED BY BATTERY
CHARGE CONTROLLER, WHILE KEEPING
VOLTAGE TO BATTERY CHARGE CONROLLER
ABOVE LOW VOLTAGE SHUTOFF LEVEL

DONE

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6300744 B1